# EUROPEAN PATENT APPLICATION

(11) **EP 2 503 309 A1**
(43) Date of publication of application: **26.09.2012**
(21) Application number: 10831180.4
(22) Date of filing: 22.10.2010
(51) Int. Cl.: G01J 1/12

(54) **DYNAMIC ELECTRO-OPTICAL PHOTOMETRIC DEVICE AND THE METHOD THEREOF FOR DYNAMICALLY MEASURING THE AMOUNT AND DISTRIBUTION OF POLYCHROMATIC LIGHT**

(30) Priority: 17.11.2009 ES 200931006
(71) Applicant: Simulacions Optiques S.L., 08221 Terrassa (ES)
(72) Inventor: ARASA MARTI, José, 08221 Terrassa (ES); PIZARRO BONDIA, Carlos, 08221 Terrassa (ES); CAUM AREGAY, Jesús Maria, 08221 Terrassa (ES); BLANCO NIETO, Patricia, 08221 Terrassa (ES); FERNANDEZ DORADO, José, 08221 Terrassa (ES); ARJONA CARBONELL, Maria Montserrat, 08221 Terrassa (ES); TOMAS COROMINAS, Nuria, 08221 Terrassa (ES); ALARCON ESCOBAR, Fermín, 08221 Terrassa (ES); OTEO LOZANO, Esther, 08221 Terrassa (ES); SANABRIA ORTEGA, Fernándo Guillermo, 08221 Terrassa (ES)
(74) Representative: Ponti Sales, Adelaida
(86) International application number: PCT/ES2010/070681
(87) International publication number: WO 2011/061371

(57) **Abstract**

The device comprises a set of black and white CCD cameras in a row, black and white distance-recording and control cameras, a colour viewing camera, a photometric reference unit, a spectral sensor and a scanning system that are strategically situated and interconnected and can be used to dynamically measure the amount and distribution of polychromatic light.

The device has a compact design, which makes it possible to measure the amount and distribution of light on large remote surfaces (large field), in a variable environment.

## Description

The present invention relates to a dynamic electro-optical photometric device and the method thereof for dynamically measuring the amount and distribution of polychromatic light on large remote surfaces, in a variable environment.

The invention pertains to the technical field of radiometry and photometry with the novelty of being an indirect measurement procedure whose application is dynamic, adapted to the environment and away from the large surface to be measured. That is, one in which the measurement is made by moving the device in a way that has been adapted to the analysed surface, regardless of its location, shape or distance.

There are many applications for which it is necessary to know the amount and distribution of light on a surface and thus determine the amount of light on any point thereof. This analysis could be part of, for example, an inspection or quality control procedure of a lighting system with countless applications in various fields such as agriculture, architecture, civil engineering, road traffic or public security, among others.

The ability to measure the distribution of light on a surface opens up the possibility of optimising current lighting systems by detecting any deficiencies or excess light that may cause undesirable effects due to, for example: the design of the light, the spacing between them, the type of lamps used, etc.

The growing number of new lighting systems being implemented together with the new concept of saving energy and environmental friendliness, are producing a systematic increase of market demands for procedures for measuring the amount and distribution of light on surfaces and for the development of devices capable of working in a wide range of conditions.

In this regard, there are currently several radiometric or photometric devices based on various technologies (mainly photoelectric and CCD) that record the energy that reaches them but they are all inadequate in so far as they are unable to measure the amount and distribution of light on large surfaces (large field), located at any distance and even of variable shapes.

Current techniques and devices are based increasingly on devices consisting of CCD cameras capable of converting photons into electrons and measuring the amount of light reaching a surface. These devices, to date, the latest reliable reference is a European project called "NICOLAU" in which a car headlight can be measured indirectly with the severe limitation of only measuring angles of incidence greater than 40 degrees ["NICOLAU: Characterization of automotive headlamps using near-field photometry techniques",S. Royo, M. J. Arranz, J.Arasa, SPIE Proceeding Vol 5663, pp.76-85, 2005] have not been able to effectively combine the measurement of a large field with a processing time and measurement accuracy so that both the methods and the measurement devices are efficient. Current systems are designed to measure small areas and are therefore extremely slow when used to measure large areas, making them unsuitable for inspecting or checking large surfaces and all the more so if they are at different distances from the measuring device.

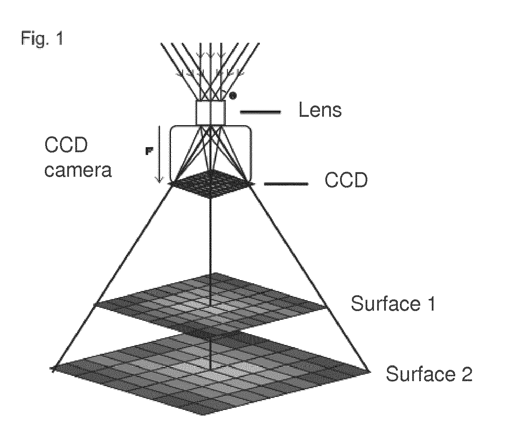

The present invention, despite using a CCD device, not only measures the amount of light but also its distribution using an indirect and totally different procedure based on determining the slopes of narrow beams of light focused on the plane of the CCD. The procedure of this invention determines the slopes of narrow beams of light by focusing the lens of the CCD camera at infinity, so the energy recorded for each pixel, considering their small size, only comes from a single direction (Fig. 1). On this basis, the angle of incidence of the beam (θ) is found using the position of the pixel (x,y) and its distance from the lens, which is equal to the focal length thereof (f'), where both are known. Each pixel of the CCD provides the amount of energy received and the slope of the incident beam. The map of light distribution on the CCD can be extrapolated, by knowing the slopes of the beams, to any other plane located at a known distance or even uneven surfaces by simply finding the intersections of the beams with the new plane.

This slope measurement system has been successfully applied in the patent application no. P200801034 entitled "Optical device and method for reconstructing and compensating for the wavefront from a complex optical element", as well as in ["NICOLAU: Characterization of automotive headlamps using near-field photometry techniques",S. Royo, M. J. Arranz, J.Arasa, SPIE Proceeding Vol 5663, pp.76-85, 2005].

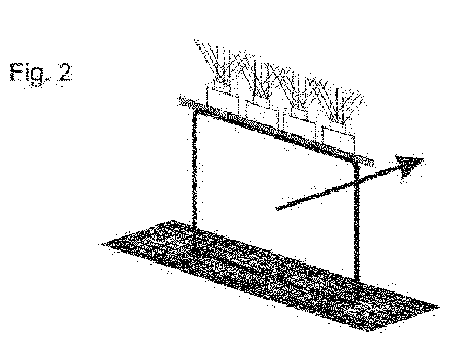

Moreover, the procedure of this invention is dynamic in order to cover large surfaces. The field covered by a CCD is directly related to the size of the pixel mosaic and thus limits the area of the analysed surface. The procedure of the invention is dynamic, i.e. it continuously scans the analysed surface using a row of CCD cameras (Fig.2). The arrangement of the CCDs in a row, together with right spacing between them, extends the width of the measured area, thanks to the data provided by each CCD. The scanning action means that this in-line detection covers the surrounding areas while the device moves over the surface. Usually a radiometer, placed on the surface to be measured, is only capable of measuring in the order of one square centimetre. The proposed system can measure in the order of 50 linear cm over the length you wish to move the device.

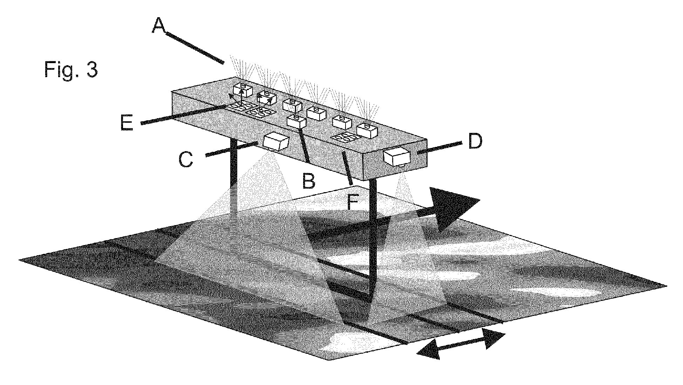

The present invention also provides a device based on the aforementioned procedure whose design incorporates a series of sensors, described below, working together to provide the values of all the parameters needed to accurately and reliably calculate the amount and distribution of light on any large remote surface, in a variable environment, for example, one that has inclines or deformations (Fig.3).

The device of the invention comprises the following elements: a set of black and white CCD cameras in a row (A), a black and white CCD camera for monitoring the position and scan speed of the entire device (B), a colour camera for viewing the environment (C), a black and white camera for keeping a continuous recording of the distance between the row of CCDs and the analysed surface (D), a photometric reference unit (E) and a spectral sensor (F) for recording the spectrum of the light received by the row of black and white CCDs.

The array of black and white CCD cameras in a row (A), used for detecting the slopes of the beams and the energy received in each pixel, consists of black and white CCD cameras with their respective optical lenses of equal focal length (f') and f-number (f/#), facing directly towards the light source, avoiding any problems caused by shadows from parts of the system.

The black and white CCD camera (B) is used to capture the image of the reference marks which, after processing, will give the location of the device and determine the scan speed thereof. It is placed next to the row of cameras, facing directly towards the light source and uses the references (visual signals or GPS locator) to perform its function.

The CCD colour viewing camera (C) continuously captures the image of the measured surface and the surrounding environment. It is used for subsequently displaying the results on a computer screen.

The black and white camera (D) with an optical lens focuses the point of contact between the device and the analysed surface. The subsequent processing of the data collected provides the distance between the row of CCDs and the analysed surface.

The reference photometric unit (E), facing directly towards the light source, consists of several sensors and neutral filters of different optical densities, each linked to a sensor, and is used as a reference in the subsequent processing of data.

The spectral sensor (F), pointed directly towards the light source, allows for the spectrum of light under which the measurement was taken to be recorded and, after the subsequent processing of the radiometric flow received by each pixel, allows for the radiation received to be gauged, providing the result of the light distribution. This application is of great importance when the device is applied to the detection and inspection of lights, as it provides the actual values perceived by the human eye.

The device of the invention also has a data logger and a synchroniser, which, through the application of the right algorithms, is able to synchronise the measurements taken with all the elements described.

The device must be connected to a motor-driven displacement unit with a controlled scanning speed, so that the scanner can measure the distribution of light on the surface. Using the right software, the data from all the device's sensors and cameras provide the amount and distribution of light on the analysed surface.

The device of the invention is equipped with a computer system that manages the software for synchronizing all the elements described. The results are displayed on the screen of a computer monitor as text, images or graphics. The data displayed on the screen are, for example, isolux diagrams, the image generated from the values obtained by the sensors, together with the illumination profile received on a cutting plane, the distance between the sensor array and the plane on which you want to know the illuminance distribution. The software is also designed to export data as text or as binary files and also allows reports to be printed.

This structural configuration makes an indirect measuring device with a robust and compact design, which can be connected, for example, to the arm of a robotic system for taking measurements in awkward positions, e.g. in an inclined position, in process control procedures.

The device of the invention is suitable for taking measurements quickly and reliably in many environments, regardless of whether the analysed surfaces are flat or inclined, vary in shape or if the light changes during the measurement process. Thus, the device provides a broad spectrum of applications and advantages.

The device of the invention has many applications, such as measuring the amount and distribution of light on surfaces such as shop windows, pavements, greenhouses, farms, etc. By way of example, the device of the invention has been used for measuring the distribution of light on the roadway of a road lit by a series of street lights. To that end, this device was mounted on a car which moved over the road and acted as a motor-driven displacement unit for the entire device.

The operation of the device of the present invention is described below.

The user places the device on the displacement unit chosen to execute the scanning procedure over the analysed surface and at a certain distance therefrom. The image capture system is then turned on, consisting of the row of CCD cameras, while also triggering the acquisition software and focusing the CCD camera lenses at infinity. The photometric unit and the spectral sensor are then connected. Subsequently, the viewing camera is turned on so as to control the focus. Finally, the two CCD cameras intended for locating and measuring the distance from the analysed surface are turned on and properly aligned. The displacement unit is then activated and the devices are checked on the computer screen to ensure that they are operating and providing data.

The device is able to carry out measurements with an extraordinary lateral resolution set by the dimension of the projected pixel, which is approximately 0.5 mm for a distance between the sensors and the area of interest to the extent of 1.5 m. This reduces the spatial sampling to valuesin the order of 0.5 mm, which is ideal for measuring large surfaces with high precision. In this device, lenses with a field of view of 180 degrees and a high f-number (f/#), in the order of 2, can be used, making it possible to measure surfaces with any degree of slope, regardless of their gradient, i.e. the device is able to collect complete information from the half-sphere field of view, which means a solid angle of 2 pi steradians.

The user selects the start time for the capture process, also activating the acquisition software associated with it. Unlike in the usual radiometer, the data is recorded on a different plane to the one on which the illumination is to be measured, obtaining the set of directions, positions and energy values required to intensively and extensively calculate the illumination on the desired plane. The beam received by the sensor is projected onto the CCD device. The series of images obtained while scanning the sample allows, with the right algorithm, for the distribution of light on the analysed surface to be obtained.

In this way, with the proper technique, it is possible to take continuous surface measurements in the order of kilometres, limited only by the storage capacity of the data logger, with a repeatability in the order of 5%, a margin of error caused by the modest number of sensors used. In the present patent, all the examples provided are for an array of six sensors distributed uniformly over one metre, but the space between the 6 sensors may be increased to 10 cm without great difficulty. This would mean covering less distance if the same data storage capacity were maintained, regardless of variations in surface height compared to the CCD camera array, i.e. for all the values of numerical aperture.

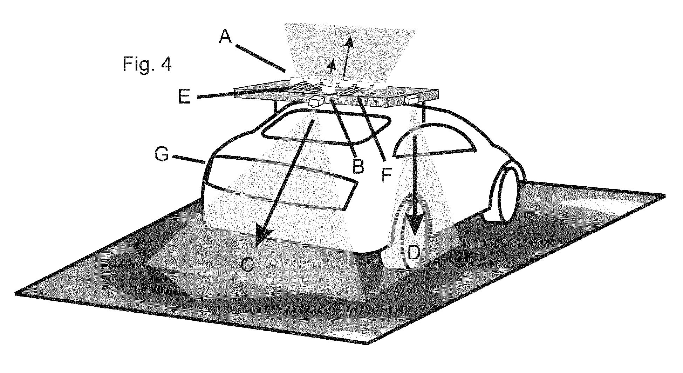

A practical application is described below: mounting the device on a car in order to dynamically measure light distribution on the pavement of a street lit by a series of street lights (Fig. 4). With this description, the characteristics, advantages and operation of the device of the present invention will become clearer. The description will be given, hereinafter, by way of example and without limitation, in conjunction with the accompanying drawing herein, which corresponds to a schematic overview of an electro-optical photometric device according to the invention.

The device illustrated by way of example in this drawing, which is enclosed herein, is labelled Figure 4.

The illustrated device consists of a support measuring 200x1500x300 mm incorporating in its upper part all of the key elements (A, B, C, D, E and F) described above and detailed below:
The array of black and white CCD cameras in a row (A) consists of six cameras placed horizontally on the support, facing upwards and 250 mm apart. ½-inch CCD camera with VGA resolution and f'=2.8 wide-angle lenses with a field of view of 182° (i.e. a little more than a half-sphere dome) and f/2. Synchronously connected to a single data logger that stores all the camera data, together with additional information described below.
The black and white CCD camera for controlling the position and scanning speed (B) is positioned on the support, facing upwards, and is connected to a single time base that synchronises all the readings.

The colour camera for viewing the environment (C) is located in the centre of the support, facing downwards. As regards the technical characteristics of the camera, it has a ½ inch CCD and an f-number of 2, synchronised with all the recordings, but the field of view is restricted to the central 50 degrees, enough for a user to know where the reading is being conducted.

The black and white camera for the continuous recording of the distance between the row of CCDs and the analysed surface (D) is at one end of the support and facing downwards so that it captures the image of the car's wheel and the ground. This camera plays an important role since, once determined the height of the sensors to the ground before starting to measure, the variations in this camera's image will be proportional to any instantaneous variations in height, for example due to the features of the terrain and the vehicle's suspension.

The reference photometric unit (E) comprises an integrating sphere containing two identical electronic boards. Each board contains 4 photodiodes and 4 neutral density filters of different optical densities, each connected to a photodiode, covering a field of 45°. The neutral density filters are in increments of 1 OD so that the readings from the first photodiode are between 0 and 10 lx, the second photodiode between 0 and 100 lx, the third photodiode between 0 and 1000 lx and the fourth photodiode between 0 and 10000 lx. This unit is located next to each slope-detecting camera in order to retrieve accurate information on the amount of energy reaching each of the sensors, not via a CCD register but rather a known and calibrated photometric record. It faces upwards and is connected to the same information base as the rest of the elements. Also, the frequency of readings has been increased to 1000 samples per second in order to pick up fluctuations in the intensity of the street lighting.

Finally, the spectral sensor (F) consists of 8 photodiodes and 8 different wavelength filters, each with a bandwidth of about 50 nm, each linked to a sensor, so that each photodiode only captures certain wavelengths, providing information on the light spectrum being measured by the CCD camera array. Once processed, the photometric values are given. This sensor is also located next to the direction sensors and connected to the same logging unit.

From these images, with the right software, you can obtain the representation of the results of the light distribution on the analysed surface.

The scanning system (G) consists of a car that moves over the road and that incorporates the device of the invention.

The device of the invention is equipped with a computer system that manages the software for synchronizing all the elements described. The results are displayed on the screen of a computer monitor as text, images or graphics. The displayed data are, for example, isolux diagrams, the image of the road, together with the illumination profile received on a cutting plane, the distance between the sensor array and the plane of interest. The software is also designed to export data as text or as binary files and also allows reports to be printed.

Having adequately described the nature of the electro-optical photometric device of the present invention in conjunction with the accompanying drawings, it shall be understood that any amendments to the details that are deemed appropriate may be made, provided the essential characteristics of the invention summarised in the following claims are not altered.

## Claims

1. Dynamic electro-optical photometric device (Fig.3) which comprises a set of black and white CCD cameras in a row, black and white (B, D) and colour (C) cameras, a photometric reference unit (E) and a spectral sensor (F), **characterised in that** it includes, in addition, a scanning system (G) which moves over the surface and that incorporates the invented device for dynamically measuring the amount and distribution of polychromatic light on large remote surfaces, in a variable environment.

2. Dynamic electro-optical photometric device (Fig.3) according to claim 1 **characterised in that** said photometric device (E) faces directly towards the source of the light, it consists of various sensors and neutral density filters of different optical densities, each one associated with a sensor, and it is used as a reference in the subsequent processing of the information.

3. Dynamic electro-optical photometric device (Fig.3) according to claim 1 **characterised in that** said set of black and white CCD cameras (A) in a row are for detecting the slopes of the beams and the energy received in each pixel.

4. Dynamic electro-optical photometric device (Fig.3) according to claim 1 **characterised in that** the black and white camera (B) is for controlling the position and scanning speed of the whole device and the black and white camera (D) is for keeping a continuous record of the distance between the row of CCDs (A) and the analysed surface.

5. Dynamic electro-optical photometric device (Fig.3) according to claim 1 **characterised in that** said colour camera for viewing the environment (C) continuously captures the image of the measured surface and the surrounding environment for the subsequent presentation of the results.

6. Dynamic electro-optical photometric device (Fig.3) according to claim 1 **characterised in that** said spectral sensor (F) consisting of photodiodes and filters of various wavelengths, analyses the spectrum of light under which the measurement was made and gauges the radiation received.

7. Dynamic electro-optical photometric device (Fig.1) that comprises a CCD camera and a wide-angle lens (Fig.1) that works with any conventional photometer and that provides directional photometric information from the measurement made by the photometer.

8. Dynamic electro-optical photometric device according to claims 1 and 7 that uses its own position as a reference either via an external sensor (Fig.3 D) or using the data of the CCD camera.

9. Dynamic electro-optical photometric device (Fig.1) according to claims 1 and 7, **characterised by** providing photometric data valid for monitoring energy consumption in buildings or on public or private roads.

10. Dynamic electro-optical photometric device (Fig. 3 or Fig.1) according to claims 1 and 7, **characterised by** having a remote communication environment for monitoring, sending and receiving data.
